(19) Europäisches Patentamt / European Patent Office / Office européen des brevets

(11) **EP 4 300 916 A1**

(12) **EUROPEAN PATENT APPLICATION**

(43) Date of publication:
**03.01.2024  Bulletin 2024/01**

(21) Application number: **22305932.0**

(22) Date of filing: **27.06.2022**

(51) International Patent Classification (IPC):
**H04L 65/1059** (2022.01)   **H04L 65/80** (2022.01)
**H04L 65/61** (2022.01)   **H04L 67/104** (2022.01)

(52) Cooperative Patent Classification (CPC):
**H04L 65/1059; H04L 65/61; H04L 65/80;**
**H04L 67/104**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Streamroot**
**75001 Paris (FR)**

(72) Inventors:
• **STORELLI, Alexandre**
**75012 PARIS (FR)**
• **LE FRIOUX, Ludovic**
**75007 PARIS (FR)**

(74) Representative: **Marks & Clerk LLP**
**15 Fetter Lane**
**London EC4A 1BW (GB)**

(54) **A CONTROLLER FOR CONTROLLING A PLAYER IN A PEER-TO-PEER NETWORK**

(57)    A controller (16) for controlling a player (14), the player (14) being configured to: play back segments of a data stream stored in a buffer (12), and request at least one segment of the data stream to be transferred from a peer-to-peer cache (10) to the buffer (12) whenever an amount of data pending for playback in the buffer (12) is less than a data threshold, wherein the peer-to-peer cache (10) stores segments of a data stream in a format adapted for transfers in a peer-to-peer network; wherein the controller (16) is configured to: be set into a dynamic mode wherein the controller (16) alternately sets the data threshold to first value and to a second value greater than the first value, and into be set into a static mode wherein the controller (16) maintains the data threshold at the second value; and switch between the dynamic mode and the static mode whenever predefined conditions are met.

FIG. 3

EP 4 300 916 A1

**Description**

**TECHNICAL** FIELD

The present disclosure relates to data streaming in "peer-to-peer" (P2P) networks.

BACKGROUND

"Streaming" designates a method wherein a client device plays a data stream (for instance an audio or a video stream) while said data stream is recovered from the Internet. This contrasts with downloading, which requires the client device to recover all the data of the audio or video content before being able to play it.

In the case of streaming, storing the data stream at the client device is temporary and partial, since data is continuously downloaded in a buffer of the client (typically in a random-access memory of the client device), analyzed on-the-fly by a processor of the client device and quickly transferred to an output interface (a screen and/or loudspeakers) and then replaced with new data.

The data stream is provided by at least one server referred to as "content delivery network", or CDN. The client which desires to play the data stream sends a request to recover first segments therefrom (a segment means a data block of the content, corresponding generally to a few seconds of playback). When there is a sufficient amount of data in the buffer, the playback starts. In the background, the stream is continuously downloaded in order to uninterruptedly supply the buffer with the remaining part of the data stream.

However, it is noticed that this approach has limits if a great number of client devices desire to play the same content simultaneously: the server is found to be saturated, being incapable of providing the content at a sufficient rate for playing to be fluid, and jerks occur.

Recently, an alternative strategy based on "peer-to-peer" (P2P) has been suggested, in which each client device acts as a server for other client devices: they are called peers. A peer which has started playing the data stream can forward to others peers segments it has already received, and so on. This strategy is for instance described in WO 2012/154287.

To implement this P2P strategy, a peer-to-peer cache is allocated in the memory of the client device. This P2P cache comes in addition to the buffer aforementioned. A given segment of the data stream provided by a CDN or from another client device is first stored in the P2P cache. The segment comprises chunks which are downloaded independently from each other. Once all chunks of the segment are present in the P2P cache, said segment can be transferred to the buffer for playback.

Usually, a dedicated component of the client device, usually referred to as a "player" or a "media engine", is configured to process data transferred from the P2P cache to the buffer, so as to convert it into audio or video signals able to be rendered by speakers or on a screen. Of course, it is important that the buffer always stores some data pending for playback, in order to ensure playback continuity. To that end, the player is set with a threshold. Whenever an amount of data pending for playback in the buffer is less than the threshold, the player requests further segments of the data stream.

It has been proposed to shift the threshold used by the player during a playback session. The threshold actually switches from a first value to a second value greater than the first value when some conditions are met. The threshold switches from the second value to the first value when some other conditions are met. When the threshold has the first value, the client device tends to act more like a leecher, i.e. a peer which downloads segments from other peers. When the threshold has the second value, the client tends to act more like a seeder, i.e. a peer which uploads segments to other peers. However, due to the conditions to meet for switching the threshold, the threshold does not stay at the second value for long. In other words, the client acts more like a seeder during a limited amount of time. More generally, frequent switches between the first value and the second values lead to undesirable instability.

SUMMARY

A goal of the present disclosure is to overcome the issue identified above.

It is therefore proposed, according to a first aspect, the controller of claim 1, i.e. a controller for controlling a player, the player being configured to:

- play back segments of a data stream stored in a buffer, and
- request at least one segment of the data stream to be transferred from a peer-to-peer cache to the buffer whenever an amount of data pending for playback in the buffer is less than a data threshold, wherein the peer-to-peer cache stores segments of a data stream in a format adapted for transfers in a peer-to-peer network,

wherein the controller is configured to:

- be set into a dynamic mode wherein the controller alternately sets the data threshold to first value and to a second value greater than the first value, and into
- be set into a static mode wherein the controller maintains the data threshold at the second value,
- switch between the dynamic mode and the static mode whenever predefined conditions are met.

The controller according to the first aspect may further comprise the optional features listed below, taken alone or in combination whenever it makes sense.

Preferably, a necessary condition for switching between the dynamic mode and the static mode is that a rate of segments uploaded from the peer-to-peer cache in the peer-to-peer network crosses a threshold rate.

More precisely,

- a necessary condition for switching from the dynamic mode to the static mode may be that a rate of segments uploaded from the peer-to-peer cache in the peer-to-peer network is greater than a threshold rate, and/or
- a necessary condition for switching from the static mode to the dynamic mode may be that the rate of segments uploaded from the peer-to-peer cache to peers in the peer-to-peer network is lower than a threshold rate.

In an embodiment, the threshold rate may be computed from a bit rate of the data stream so that the threshold rate increases when the bit rate of the data stream increases.

In another embodiment, the threshold rate may be computed from a plurality of rates of segments uploaded in the peer-to-peer network by respective peers which are connected to the controller in the peer-to-peer network.

The threshold rate may be a predefined percentile of a distribution formed by the plurality of rates.

Preferably:

- a necessary condition for switching from the dynamic mode to the static mode is that a rate of segments uploaded from the peer-to-peer cache in the peer-to-peer network is greater than a first threshold rate,
- a necessary condition for switching from the static mode to the dynamic mode is that the rate of segments uploaded from the peer-to-peer cache to peers in the peer-to-peer network is lower than a second threshold rate, wherein the second threshold rate is greater than the first threshold rate.

The first threshold rate may be computed from a plurality of rates of segments uploaded in the peer-to-peer network by a plurality of first peers which are connected to the controller in the peer-to-peer network, and the second threshold rate is computed from a plurality of rates of segments uploaded in the peer-to-peer network by a plurality of second peers.

The first threshold rate may be a first predefined percentile of a distribution formed by the plurality of rates of segments uploaded in the peer-to-peer network by the plurality of first peers, and the second threshold rate may be a second predefined percentile of a distribution formed by the plurality of rates of segments uploaded in the peer-to-peer network by the plurality of second peers

The plurality of second peers may not be identical to the plurality of first peers. The plurality of second peers may be a subset of the plurality of first peers.

The second percentile may be different from the first percentile. The second percentile may be lower than the first percentile.

Preferably, the controller is configured to detect whether each peer connected to the controller in the peer-to-peer network is set in the static mode or in the dynamic mode, and:

- the plurality of first peers comprises all the peers which are connected to the controller in the peer-to-peer network,
- the plurality of second peers consists of all the first peers which are detected to be set in the static mode.

Another necessary condition for switching between the dynamic mode and the static mode may be that a number of peers connected to the controller in the peer-to-peer network crosses a threshold number.

More precisely:

- a necessary condition for switching from the dynamic mode to the static mode is that a number of peers connected to the controller in the peer-to-peer network is strictly lower than a threshold number, and/or
- a necessary condition for switching from the static mode to the dynamic mode is that a number of peers connected to the controller in the peer-to-peer network is greater than or equal to a threshold number.

The threshold number may be equal to 1.

Preferably, only the peers which are detected to be set in the static mode are counted in the number of peers.

The threshold number may be computed from a total number of peers connected to the controller in the peer-to-peer network so that the threshold number increases with the total number of peers.

Preferably, the controller set in the dynamic mode is configured to:

- determine a download completion ratio associated with a reference segment of the data stream, the download completion ratio being representative of a ratio between a number of chunks of the reference segment which are present in the peer-to-peer cache and a total number of chunks of the reference segment,
- compute a score depending on the download completion ratio,
- switch the data threshold from the first value to the second value greater than the first value only if the score meets a predefined condition.

Preferably, the controller set in the dynamic mode is configured to switch the data threshold from the second value to the first value whenever the amount of data pending for playback in the buffer becomes greater than the second value and/or whenever detecting that a next segment to be transferred in the buffer is a newest segment of the data stream made available for download by a content delivery network.

According to a second aspect, it is proposed a peer for a peer-to-peer network, wherein the peer comprises:

- a network interface for transferring segments in the peer-to-peer network,
- a controller according to the first aspect,
- an output device for outputting segments played by the player to a user of the client device.

A third aspect of the present disclosure is a method comprising:

- providing a controller according to the first aspect,
- switching between the dynamic mode and the static mode whenever the predefined conditions are met.

## DESCRIPTION OF THE DRAWINGS

The above and other objects, features and advantages of this invention will be apparent in the following detailed description of an illustrative embodiment thereof, which is to be read in connection with the accompanying drawings wherein:

- Fig. 1 represents a network architecture according to an embodiment.
- Fig. 2 schematically represents a peer-to-peer network according to an embodiment
- Fig. 3 schematically shows components of a client device according to an embodiment.
- Fig. 4 shows steps of a method of controlling a player.
- Fig. 5 shows steps of a method of configuring a peer-to-peer streaming module according to an embodiment.
- Fig. 6 shows steps of a method of configuring a peer-to-peer streaming module according to another embodiment.

## DETAILED DESCRIPTION OF A PREFERRED EMBODIMENT

### 1) Peer-to-peer network

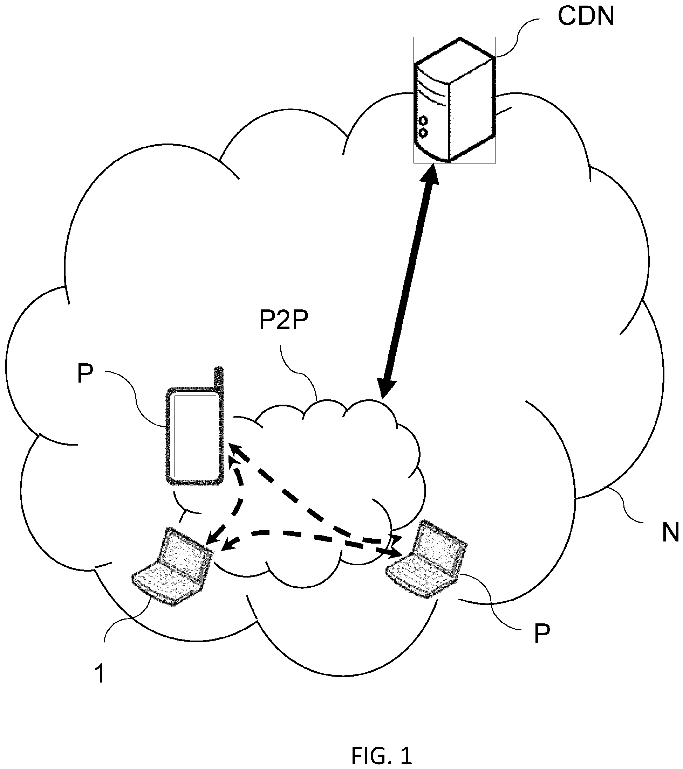

Referring to **figure 1,** a network N includes a CDN (Content Delivery Network), as well as a peer-to-peer network, referred to in the following as "P2P network".

The P2P network includes several client devices, including a client device 1 and further client devices P. The client devices 1, P are peers in the P2P network.

The CDN comprises at least one server providing a data stream in accordance with a given streaming protocol. The data stream comprises a sequence of segments which are supposed to be played successively by any client such as client device 1.

It is to be noted that each segment of the data stream comprises multiple chunks. Each chunk is a portion of the data stream which can be transferred in the P2P network, especially in the P2P network, independently of other chunks.

The CDN is the primary source of the data stream, insofar as initially no peer of the P2P has segments thereof. The data stream may be stored in its entirety by the CDN before it is transferred in the P2P network (in the case of VOD), or may be generated in real time (in the case of live streaming).

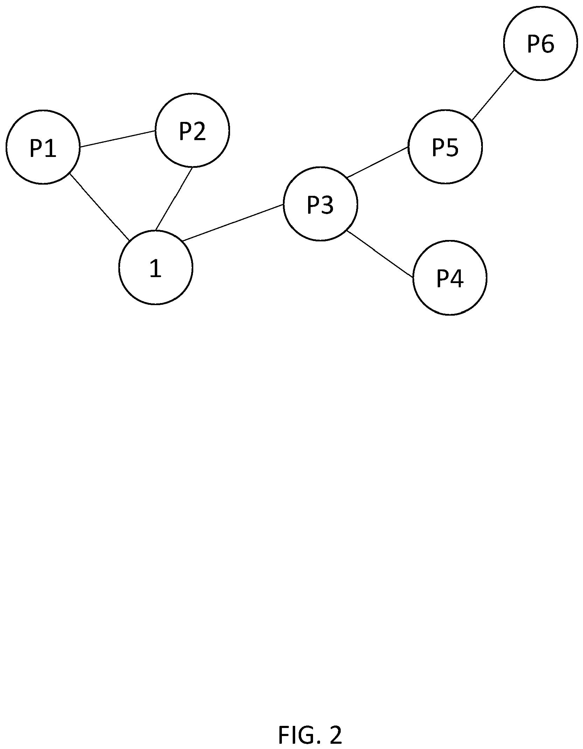

The P2P network is a meshed network, which is not necessarily fully connected. In the present disclosure, two peers are considered to be "connected" in the P2P network to each other whenever a P2P data transfer of data can be directly performed between them, without requiring any further peer. **Figure** 2 shows an example of a P2P network partially connected. In this example, client device 1 is connected to peers P1, P2, P3, but not connected to further peers P4, P5, P6.

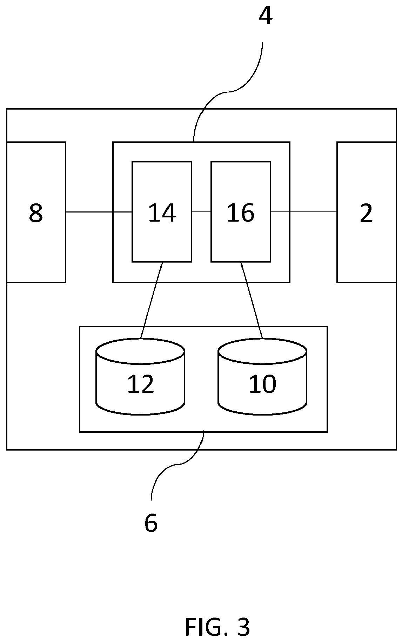

Referring to **figure 3,** the client device 1 comprises a communication interface 2, a peer-to-peer streaming module 4, a storage unit 6 and an output interface 8.

The communication interface 2 is able to connect to network N such that the client device 1 can receive portions of the data stream from the CDN or any peer P.

The output interface 8 comprises a screen and/or speakers.

The storage unit 6 includes a volatile memory such as random-access memory. Two zones are allocated in the volatile memory: a P2P cache 10 and a buffer 12 as described in the introduction of the present disclosure.

The P2P cache 10 is designed to store segments of the data stream in a first format suitable for transfers in the P2P network. This format is not necessarily suitable for playback.

The smallest portion of the data stream which can be transferred from the network in the P2P cache 10 is a chunk, which is smaller than a segment. In other words, the P2P cache 10 is able to store some chunks of a given segment whereas other chunks of the segment are missing in the P2P cache 10. Besides, chunks are not necessarily received in chronological (playback) order. As a consequence, there may be discontinuities in the chunks stored at some point in the P2P cache 10.

Transferring a segment present in the P2P to the buffer 12 does not imply that said segment is immediately deleted from the P2P cache 10. As described hereinafter, a copy of the segment may be kept in the P2P cache 10, such that the client device 1 can seed it to other peers P.

As already explained in the background section of the present disclosure, the buffer 12 is designed to store consecutive portions of the data stream. A segment of the data stream is the smallest portion of the data stream which can be transferred from the P2P cache 10 to the buffer 12.

The peer-to-peer streaming module 4 comprises a player 14 and a P2P controller 16.

The player 14 is configured to play portions of the data stream stored in the buffer 12 so as to convert them into signals able to be rendered by the output interface.

Furthermore, player 14 is configured to request further segments of the data stream, whenever an amount of data pending for playback in the buffer 12 is below a threshold BT (sometimes referred to as "Buffer Target", hence the BT acronym). This threshold is actually a configurable parameter of the player. Thus, this threshold will be referred to as threshold parameter BT hereinafter.

The P2P controller 16 is actually configured to access the P2P cache 10, interact with the player 14 and interact as well with chunk providers (the CDN and peers P). In particular, the P2P controller 16 is configured to adjust the threshold parameter BT used by the player 14, manage data transfers in the P2P network, and feed the buffer 12 with new segments in response to requests of the player 14.

In the embodiment shown in figure 3, the player 14 is a component of the peer-to-peer streaming module 4. Alternatively, the peer-to-peer streaming module 4 and the player 14 may be distinct components.

The peer-to-peer streaming module may comprise code instructions forming a computer program which may for instance be a dedicated application, an internet browser in particular HTML5 compatible, an operating system module, The code instructions are adapted to be executed by at least one processor of the client device 1. The player 14 and the P2P controller 16 may be distinct computer program modules. In particular, player 14 may be able to play data coming from other sources than the P2P cache 10. Thus, the P2P controller 16 (and more generally the module 4) may be regarded as a separate component coming in addition to the player 14.

The P2P streaming module 4 is able to be set in two modes: a dynamic mode and a static mode.

In the dynamic mode, the threshold parameter BT is allowed to change over time. More specifically, the threshold parameter BT is allowed to be alternately set to a first value and to a second value greater than the first value, according to a policy which is described hereinafter. The threshold parameter BT switches from the first value to the second value when first conditions are met, and switches from the second value to the first value when second conditions are met.

In the static mode, the threshold parameter BT is maintained at the second value. In particular, the threshold parameter BT is prevented from switching from the second value to the first value even though the second conditions above-mentioned are met, as long as the peer-to-peer streaming module 4 is set in the static mode.

2) Method carried out by the peer-to-peer streaming module

A method carried out by the peer-to-peer streaming module 4 includes the steps described below.

In a preliminary step, the P2P cache 10 and the buffer 12 are allocated in the storage unit 6 of the client device 1.

Besides, the P2P controller sets the threshold parameter BT to an initial value.

Furthermore, the P2P controller sets itself in the dynamic mode.

2.1) Download and playback

The client device 1 regularly receives chunks of the data stream from the network. When the communication interface downloads a chunk of the data stream from the CDN or from a peer P, the P2P controller 16 stores the downloaded chunk in the P2P cache 10. From this point on, the chunk becomes available from the client device 1 to other peers P in the P2P network. As already explained above, a chunk is a portion of a segment of the data stream. When all chunks of a given segment are stored in the P2P cache 10, the segment is "complete".

At some point, the P2P controller 16 receives a request sent by the player 14. The request actually requests new segments of the data stream to be transferred from the P2P cache 10 to the buffer 12. As explained before, this request is actually sent by the player 14 whenever the player detects that an amount of data pending for playback in the buffer 12 is below the threshold parameter BT of the player 14 (in other words, when the player 14 is "starving").

Upon receiving the request, the P2P controller 16 checks whether at least one next segment (to be played right after the data pending in the buffer 12) is fully stored in the P2P cache 10.

If all chunks of the next segment are present in the P2P cache 10, then the P2P controller 16 recombines them so as to generate the next segment in a format suitable for playback, and transfers it into the buffer 12, such that the player 14 can play it. The chunks of each segment transferred to the buffer 12 may remain in the P2P cache 10 so as to be transferred to peers P.

If some chunks of the next segment are missing in the P2P cache 10, the P2P controller 16 generates a request for the missing chunks. This request is sent to the CDN, such that the CDN supplies the client device 1 with the missing chunks.

2.2) Upload in the P2P network

In the meantime, the P2P controller generates P2P data giving information about the content of the P2P cache 10. The P2P data is broadcasted by the client 1 in the P2P network, such that peers P can receive it and become aware of chunks available in the P2P cache 10 of client 1.

Upon request of a peer P, the P2P controller may then cause the client 1 to upload some chunks present in the P2P cache to said peer P.

**2.3) Management** of threshold parameter BT in the dynamic mode

When set in the dynamic mode, the P2P controller 16 changes the value of threshold parameter BT over time. This may be for instance carried out periodically.

For the sake of simplicity, it will be assumed hereinafter that the P2P controller 16 causes the threshold parameter BT of the player 14 to switch between a first value LBT (Lower Buffer Target) and second value HBT (Higher Buffer Target), wherein *LBT < HBT.* However, the present disclosure is not limited to this particular case, since the P2P controller 16 could set the threshold parameter BT to more than two different values in other embodiments.

Two different cases are to be distinguished: when the P2P controller 16 increases the threshold parameter BT (the threshold parameter BT switches from LBT to HBT), and when the P2P controller 16 decreases the threshold parameter BT (the threshold parameter BT switches from HBT to LBT).

2.3.1) Conditions for decreasing the threshold parameter BT (HBT->LBT transition)

Let us assume that the threshold parameter BT has been set to the second value HBT (greater than the first value LBT).

The P2P controller 14 determines the amount of data pending for playback in the buffer 12, for instance by asking the player 14 for this piece of information.

If the amount of data pending for playback in buffer 12 is greater than the current value of the threshold, then the threshold parameter BT of the player 14 is decreased. For that purpose, the P2P controller 16 sets the threshold parameter BT to the first value LBT.

It has been noted earlier that the data stream is stored by the CDN. However, in a live streaming context, new segments of the data stream are regularly generated by the CDN thus become available for download and playback by remote peers (including the client device 1). Any new segment generated by the CDN is of course to be played after the other pre-existing segments. The newest segment generated by the CDN is usually referred to as the "live edge" segment of the data stream.

A critical situation is when the player 14 consumes segments at a rate greater than the rate of generation of new segments by the CDN, such that the client device 1 may end up in a state wherein the "live edge segment" is or will be requested by the player very soon.

To take this situation into account, the P2P controller 16 sets the threshold parameter BT to the first value LBT also whenever it detects that the "live edge segment" has been entirely downloaded in the P2P cache 10. The P2P controller 16 can detect this situation by accessing a manifest updated and published by the CDN.

2.3.2) Conditions for increasing the threshold parameter BT (LBT->HBT transition)

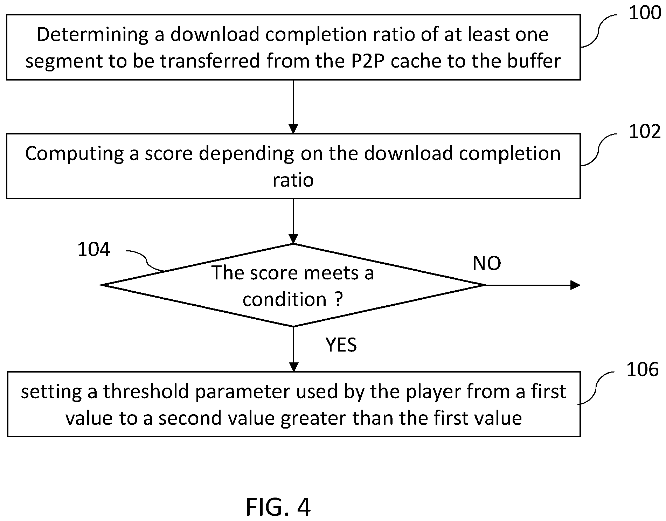

Now, let us assume that the threshold parameter BT has been set to the first value (less than the first value). In reference to figure 4, the P2P controller performs the steps set forth below.

For at least one segment of the data stream which has not been already transferred to the buffer, referred to as "reference segment" hereinafter, the P2P controller 16 determines a download completion ratio associated with the reference segment (step 100). The download completion ratio is actually representative of a ratio between a number of chunks of the reference segment which are present in the P2P cache 10 and a total number of chunks of the reference segment in the data stream. For example, the download completion ratio is 100 % whenever all chunks of the reference segments are present in the P2P cache 10, 0 % whenever no chunk of the reference segment has been downloaded, and 50% when half of the chunks of the reference segment are missing in the P2P cache 10.

Multiple download completion ratios respectively associated with consecutive segments forming a sequence in the data stream (in the sense that the segments of the sequence are supposed to be played consecutively by the player 14), including the next segment to be transferred to the buffer 12, may be determined at step 100. In other words, the P2P determines many download completion ratios respectively associated with the segments of the sequence.

Then, the P2P controller 16 computes a score CBH depending on at least one of the determined ratios (step 102).

Then, the P2P controller 16 checks whether the score CBH meets a predefined condition (step 104).

If the predefined condition is met, then the P2P controller 16 sets the threshold parameter BT of the player 14 to the second value (step 106).

If the predefined condition is not met, then the P2P controller 16 leaves the threshold parameter BT of the player 14 unchanged. In other words, step 106 is not carried out.

Steps 102, 103, 104 can be performed whenever the P2P controller receives a request issued by the player, or periodically.

An important aspect of this method is that the decision to increase the threshold parameter of the player 14 depends on at least one download completion ratio of a segment, which can have any value between 0 % and 100 %. This ratio is therefore a much more relevant information than a Boolean merely indicating whether a segment is complete or not. This makes it possible for the P2P controller 16 to be tolerant, in the sense that it may decide to leave the threshold unchanged when the download completion ratio of the next segment to be transferred to the buffer 12 is less than 100%, but very close to this value (for example 99% value).

Different embodiments for computing the score at step 102 and checking it at step 104 are possible. Four of them are described below.

2.3.2.1) First embodiment: "exponential decay"

In a first embodiment, the score CBH is computed from different score contributions respectively associated with different segments forming a sequence in the data stream.

The P2P controller 16 computes a first score contribution BH ("Buffer Health") which is associated with the data pending for playback in the buffer 12. More precisely, the first score contribution is the duration of said data pending in the buffer 12.

The P2P controller 16 computes a second score contribution, noted *CCD,* associated with a first sequence of consecutive segments of the data stream which are fully stored in the peer-to-peer cache. The first sequence is to be played right after the data pending in the buffer 12. In other words, the first sequence immediately follows the data pending in the buffer 12 in the data stream. Since the segments of the first sequence (if any) are fully stored in the P2P cache 10, CCD actually represents a continuous portion of the data stream ready to be transferred to the buffer 12.

More precisely, the second score contribution is the duration of the first sequence.

When the first sequence is empty, the second score contribution CCD is equal to zero. This occurs if at least one chunk of the next segment to be transferred in the buffer 12 is missing in the P2P cache 10.

A third score contribution, noted *DCD,* is a score contribution associated with a second sequence of consecutive segments of the data stream which are at least partially stored in the P2P cache 10. The second sequence is to be played right after the first sequence. In other words, the second sequence immediately follows the first sequence in the data stream. At least the first segment of the second sequence is incomplete in the sense that the download completion ratio associated with the first segment is strictly less than 100 % (it may even be 0 %). The first segment of the second sequence is actually the first segment of the data stream which is not fully stored in the P2P cache 10. Therefore, DCD represents chunks separated from the last segment of the first sequence by at least one gap. Of course, no segment of the second sequence can be transferred to buffer 12 since the very first segment of the second sequence is incomplete in the P2P cache 10.

When there is no segment of the second sequence in the P2P cache 10, the third score contribution DCD is equal to zero. This can for example occur when the P2P cache is 100 % filled with complete segments.

The third score contribution *DCD* is less than the duration of the second sequence, so as to reflect that the segments of the second sequence are incomplete in the P2P cache 10.

Let N be the number of segments in the second sequence. The segments of the second sequence have respective indices going from 0 to N-1, which corresponds to their playback order. This means that the very first segment of the second sequence to be played has the index i=0.

DCD is computed as follows:

$$DCD = \sum_{i=0}^{N-1} d_i r_i w_i$$

wherein:

- $d_i$ is a total duration of a i-th segment of the second sequence. $d_i$ is equal to the sum of the durations of all chunks of the i-th segment (including the missing chunks).
- $r_i$ is the download completion ratio associated with the i-th segment.
- $w_i$ is a weight assigned to the i-th segment.

The weight $w_i$ decreases (strictly or not) as an offset between the i-th segment and a last segment of the data stream played by the player 14 increases. This means that $w_0 \geq w_1 \geq ... \geq w_{N-1}$. Thanks to this rule, a segment to be played soon shall contribute more to the final score CBH than a segment to be played in a long time.

The weight has the following form:

$$w_i = c^{p_i}$$

wherein c is a constant value lower or equal to 1, and $p_i$ is a term depending on i. As a result, the contribution of an incomplete segment decreases exponentially with its position in the data stream.

In the first embodiment, $p_i = i$. Thus:

$$CBH = BH + CCD + \sum_{i=0}^{N-1} d_i r_i c^i$$

In the first embodiment:

- CBH increases as the download completion ratio $r_i$ associated with an i-th segment increases;
- $r_i$ is weighted by weight $w_i$, which decreases (strictly or not) as the playback time offset between the i-th segment and a last segment of the data stream played by the player increases.
- $r_i$ is scaled to time units by multiplying it by the total duration $d_i$ of the i-th reference segment, so that the final result can be added to BH and CCD.

As already explained, the P2P controller 16 checks whether the score CBH meets a predefined condition at step 104. Then the P2P controller 16 sets the threshold parameter BT of the player 14 to the second value at step 106 only if the score CBH meets a predefined condition.

In the first embodiment, the score CBH is compared with a second threshold, noted CBT ("Combined Buffer Target"). CBT is distinct from the threshold parameter BT used by player 14 to trigger segment requests. The second threshold CBT is predefined and is not supposed to change during playback. The predefined condition is met if and only if the score CBH is less than the second threshold.

As a consequence, if there is a sufficient amount of data pending for playback in the client device 1 (in the buffer 12 and/or in the P2P cache 10), the threshold parameter BT may not be increased. In contrast, when there is a lower amount of data pending for playback in the client device 1, the P2P controller 16 is more likely to increase the threshold parameter BT of the player 14.

2.3.2.2) Second embodiment: "continuous exponents"

In a second embodiment, the score CBH is computing as follows:

$$CBH = BH + \sum_{i=0}^{N-1} d_i r_i c^{\sum_{j=0}^{j<i} r_j}$$

Although it implements a similar logic, the second embodiment has the following difference with the first embodiment.
It can be seen that there is no more distinction between the second score contribution and the third contribution in this formula. The sum in the right part of the formula covers all segments partially or fully present in the P2P cache 10, which means that complete segments of the first sequence are weighted as well, which is not the case in the first embodiment. In other words, index i=0 is assigned to the very next segment to be transferred to the buffer 12 whatever its download completion ratio, rather than to the first incomplete segment as in the first embodiment (Seg 1 in the illustrated example).
Besides, in the second embodiment, we have:

$$p(i) = \sum_{j=0}^{j<i} r_j$$

This means that the weights $w_i$ assigned to the segments of the second sequence are computed differently than in the first embodiment. This is advantageous for the reasons set forth below.
As explained before, computing the score CBH is repeated over time. Of course, the content of the buffer 12 and the P2P cache 10 evolves, which means that the score CBH evolves as well. In the first embodiment, the score CBH may be very unstable in the sense that two consecutive computations of this score may lead to very different values. This can happen in the situation where the score CBH is computed before then after a segment gets completed in the P2P cache 10. This causes the CCD contribution of the score to increase significantly (the DCD contribution varies as well but usually less than the CCD contribution).
This instability is not desired. This instability is actually limited in the second embodiment thanks to the way the weights are computed.
Like in the first embodiment, the score CBH is compared with the second threshold (distinct from the threshold parameter BT used by the player 14 to trigger segment requests) at step 104. The predefined condition is met if and only if the score CBH is less than the second threshold.

2.3.2.3) Third embodiment: "anchored exponential decay"

In a third embodiment, the score CBH is computed as follows:

$$CBH = LBT + \int_{LBT}^{\infty} r(t).e^{\frac{(LBT-t)}{\tau}} dt$$

As said above, LBT is the current value set as threshold parameter BT.
The integral involved in this formula is a score contribution associated with segments present in the P2P cache 10 and any remaining data pending in the buffer 12 not already covered by score contribution LBT. The variable t actually corresponds to a time offset from the current time position of the player 14 in the data stream.
r(t) is a function constructed from the download completion ratios associated with the segments present in the buffer 12 and in the P2P cache 10.

The decreasing exponential term $e^{\frac{(LBT-t)}{\tau}}$ is actually a weighing function which is a continuous equivalent to the discrete weights $w_i$ involved in the first and second embodiments. $\tau$ is a constant. t is greater or equal to LBT such that the weighting function is always between zero and 1.

Like in the second embodiment, the score CBH as computed in the third embodiment remains quite stable over time.

Like in the first embodiment and in the second embodiment, the score CBH is compared with the second threshold (distinct from the threshold parameter BT used by the player 14 to trigger segment requests) at step 104.

The predefined condition is met if and only if the score CBH is less than the second threshold.

### 2.3.2.4) Fourth embodiment: "cache funnel"

It can be seen that in the first, second and third embodiments score contributions of many segments partially or totally stored in the buffer 12 or in the P2P cache 10 are summed so as to obtain an overall score. In other words, the score represents an amount of data stored in the buffer and in the P2P cache, and takes into account discontinuities in said data.

In a fourth embodiment, the score is computed using a different logic.

Required completion ratios for consecutive segments to be transferred next to the buffer 12 are computed. It is to be noted that the required completion ratio computed for a reference segment among said consecutive segments decreases as the playback time offset between the reference segment and a last segment of the data stream played by the player 14 increases.

The download completion ratio associated with a reference segment is compared with the required ratio computed for the reference segment.

The score is a Boolean score.

The score is set to:

- a value (for example 1) if all the segments have a download completion ratio which is not less than the corresponding required ratio.
- another value (for example -1) if at least one of the segments the segments have a download completion ratio less than the corresponding required ratio.

The score can for instance be computed as indicated in the pseudo-code below:

```
function requiredCompletion(t) { // t relative to LBT
    // 1 at LBT
    // 0 at CBT
    // linear profile in between
    return 1 - (t - LBT) / (CBT - LBT);
}


function getScore() {
    for (segment in segmentsAfterLBT) {
        if (completion(segment) < requiredCompletion(segment.t)) {
            return -1;
        }
    }
    return 1;
}
```

As shown in the pseudo-code above, the fourth embodiment does not strictly require all required ratios to be computed. Said ratios may be computed sequentially in a loop starting with the very next segment to be transferred from the P2P cache 10 to the buffer 12. The loop can end as soon as a segment is found having a download completion ratio less than its required threshold. In practice, this means that the score (returned by code function getscore) may depend on only one segment.

As in the previous embodiments, the P2P controller 16 checks whether the score meets a predefined condition, and sets the threshold parameter BT of the player 14 to the second value only if this condition is met.

In the fourth embodiment, this condition is met if and only if the score is -1. In other words, in the fourth embodiment, the threshold parameter BT is switched from to the first value LBT to the second value HBT only if at least one segment in the cache has a download completion ratio less than the corresponding required ratio.

**2.4) Management of threshold parameter BT in the static mode**

When the P2P streaming module 4 is in the static mode, the threshold parameter BT is maintained at the second value HBT. It cannot be decreased.

**2.5) Switching between the dynamic mode and the static mode**

The P2P streaming module 4 is configured to switch between the dynamic mode and the static mode whenever predefined conditions are met.

In the following, different embodiments relying on different predefined conditions for switching between the dynamic mode and the static mode are detailed.

**2.5.1) Embodiment based on upload ratio**

In an embodiment, a necessary condition for switching between the dynamic mode and the static mode is that a rate of segments uploaded by the client device 1 from the cache 10 in the P2P network crosses a threshold rate. In the following, this rate is referred to as "upload rate".

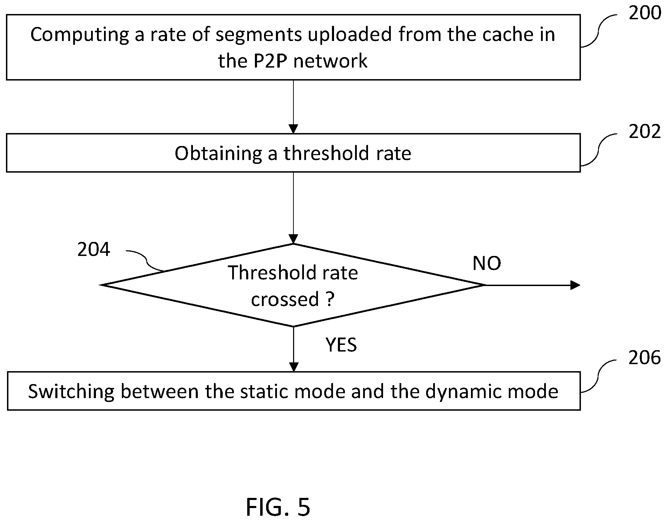

In this embodiment, the P2P streaming module 4 performs the following steps, which are depicted in **figure 5.**

In step 200, the P2P controller 16 computes the upload rate of the client device 1 based on the content of the cache 10. The upload rate may for instance be an exponentially weighted moving average over time (EWMA).

In step 202, the P2P controller obtains a threshold rate. Although figure 5 shows step 200 carried out before step 202, steps 200 and 202 may be performed in any order.

In step 204, the P2P controller compares the upload rate with the threshold rate.

In step 206, the P2P controller switches between the dynamic mode and the static mode when the upload rate of the client device 1 crosses the threshold rate. Else, the P2P controller does not switch its current mode.

More particularly, the P2P controller 16 switches from the dynamic mode to the static mode when the rate is greater than a first threshold rate. In other words, in this embodiment, detecting that the upload rate is greater than the first threshold rate is a sufficient condition for switching from the dynamic mode to the static mode.

Similarly, the P2P controller 16 switches from the static mode to the dynamic mode when the rate becomes lower than a second threshold rate. In other words, in this embodiment, detecting that the upload rate is lower than the second threshold rate is a sufficient condition for switching from the static mode to the dynamic mode.

The second threshold may be lower than the first threshold. Alternatively, the second threshold may be equal to the first threshold; in this case one single threshold rate is managed by the P2P controller 16.

These steps are conducted repeatedly by the P2P controller, for example periodically.

The principle of this embodiment is to take advantage of situations in which the client is a good seeder. When the client has a high upload rate, the client uses the static mode, which results in keeping the threshold parameter BT at the high value HBT preventing it from decreasing. This has the effect of making a segment available to other peers early enough compared to the time the corresponding peers will request said segment.

The first threshold rate and/or the second threshold rate used by the P2P may be a constant known by the P2P streaming module 4. In this case, obtaining the threshold rate at step 202 may comprise reading this constant in the storage unit 6.

Alternatively, the first threshold rate and/or the second threshold rate may advantageously depend on a bit rate of the data stream being played by the player 14. More precisely, each threshold rate advantageously increases when a bit rate of the data stream increases. In this case, obtaining the threshold rate at step 202 comprises computing said bit rate and computing the or each threshold from said bitrate.

**2.5.2) Embodiment based on the status of other peers**

In an advanced embodiment, a condition for switching between the dynamic mode and the static mode is still that the upload rate (rate of segments uploaded from the cache 10 in the P2P network) crosses a threshold rate. Further conditions based on at least one of the elements listed below at taken into account for switching between the dynamic mode and the static mode:

- a number of peers the client device 1 is currently connected to in the P2P network,
- whether said connected peers P are currently set in the static mode or in the dynamic mode (based on the assumption that said peers P comprise respective P2P streaming modules functionally identical to the P2P streaming module 4),
- the respective upload ratios of the connected peers P (i.e. for each peer, the rate of segment uploaded from the cache of said peer to any other peer).

In this advanced embodiment, each peer, including the client device 1, broadcasts a status containing:

- its current upload rate,
- its current mode (static mode or dynamic state),

For example, the status broadcasted by peer P3 in the P2P network shown in figure 2 comprises the current upload ratio of peer P3 and the current state of peer P3.

This broadcast is performed repeatedly, for instance periodically.

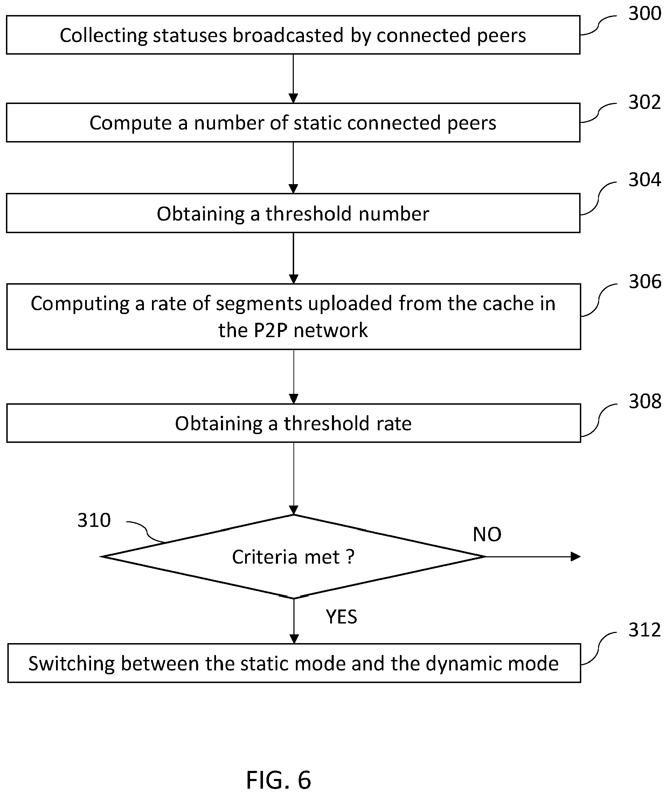

The P2P streaming module 4 performs the following steps, which are depicted in figure 6.

In step 300, the P2P streaming module 4 collects statuses respectively broadcasted by peers connected to client device 1.

In step 302, the P2P controller 16 reads the collected statuses and selectively counts the number of peers connected to the client device 1 which are currently set in the static mode (referred to as "static" connected peers hereinafter). As a result, the P2P controller 16 obtains at step 302 the number of static peers connected to the client device 1.

In step 304, the P2P obtains a threshold number.

The threshold number may be a predefined constant. In this case, obtaining the threshold number at step 304 may comprise reading this constant in the storage unit 6.

Alternatively, this threshold number advantageously depends on the total number of peers connected to the client device 1. In this case, the P2P controller 16 counts at step 304 the total number of peers connected to the client device 1 (whatever their mode) based on the data it has collected at step 300. Then the threshold number is computed by the P2P controller 16 from this total number of peers. Preferably, the threshold number increases with the total number of peers connected to the client device 1. In particular, the threshold number may be proportional to the total number of peers connected to the client device 1.

In step 306, the P2P controller 16 computes the upload rate of the client device 1 based on the content of the cache 10. Step 306 is identical to step 200.

In step 308, the P2P controller obtains a threshold rate. This threshold rate is obtained as follows. The data collected at step 300 include the upload rate of the peers connected to the client device 1. The respective upload rates of the connected peers form a distribution. The threshold rate is a predefined percentile of the distribution. For instance, the predefined percentile of the distribution is the 90th percentile thereof.

The peers taken into account in the distribution and the predefined percentile actually depend on the current mode of the client device 1.

If the client device is currently set in the dynamic mode, the threshold rate obtained at step 308 is a first threshold rate constituting a first predefined percentile of a first distribution formed by the respective upload rates of all the peers connected to the client device, whatever their mode (static or dynamic). In other words, all connected peers are taken into account.

If the client device is currently set in the static mode, the threshold rate obtained at step 308 is a second threshold rate constituting a second predefined percentile of a second distribution formed by the respective upload rates of the static peers connected to the client device. Connected peers set in the dynamic mode are not taken into account in the second distribution.

The first predefined percentile and the second predefined percentile may be identical or different. Preferably, the second predefined percentile is lower than the first predefined percentile. The first percentile may be 100 % (which means that the first threshold rate will be the highest ratio of the first distribution). Besides, the second percentile may be 50% (median of the second distribution).

In a step 310, the P2P controller compares the number of static connected peers and a threshold number, and compares the upload rate of client device 1 with the threshold rate. a predefined percentile of said distribution.

In a step 312, the P2P controller switches between the dynamic mode and the static mode or not, depending on the results of the comparisons performed at step 310.

If the client device is currently set in the dynamic mode, the P2P controller 16 switches from the dynamic mode to the static mode if all the following conditions are met simultaneously:

a) the number of static connected peers is strictly lower than the first threshold number obtained at step 308, and
b) the upload rate of client device 1 is greater than the first threshold rate.

Each of conditions a), b) is necessary for switches from the dynamic mode to the static mode, but not sufficient. In other words, the P2P controller 16 does not switch from the dynamic mode to the static mode if only one of conditions a), b) is met.

If the client device is currently set in the static mode, the P2P controller 16 switches from the static mode to the dynamic mode if the two following conditions is met simultaneously:

c) the number of static connected peers is greater than or equal to a second threshold number obtained at step 308, and
d) the upload rate of client device 1 is lower than the second threshold rate.

Each of the conditions c), d) is necessary for switching from the dynamic mode to the static mode. In other words, the P2P controller 16 does not switch from the dynamic mode to the static mode if only one of conditions c), d) is met.

In this advanced embodiment, the client device 1 tends to be set in the static mode if there are not enough "static" peers connected to it and if client device 1 has a good upload rate compared to that of other peers; otherwise, the client device 1 tends to be set in the dynamic mode. This mechanism can be seen as a "distributed leader election" in the sense it guarantees some of the peers shall be in the static mode.

Let us consider a particular example wherein the threshold number is 1. In this example, the necessary condition a) for switching from the dynamic mode to the static mode is that the number of static connected peers is equal to zero. In other words, the client device 1 is "elected" as a static peer in view of the lack of any static peer among its neighbors.

An advantage provided by the advanced embodiment is that it distributes more evenly the static peers in the swarm and reduces the number of static peers required to reach a given ratio of CDN offload.

## Claims

1. A controller (16) for controlling a player (14), the player (14) being configured to:

   • play back segments of a data stream stored in a buffer (12), and
   • request at least one segment of the data stream to be transferred from a peer-to-peer cache (10) to the buffer (12) whenever an amount of data pending for playback in the buffer (12) is less than a data threshold, wherein the peer-to-peer cache (10) stores segments of a data stream in a format adapted for transfers in a peer-to-peer network,

   wherein the controller (16) is configured to:

   • be set into a dynamic mode wherein the controller (16) alternately sets the data threshold to first value and to a second value greater than the first value, and into
   • be set into a static mode wherein the controller (16) maintains the data threshold at the second value,
   • switch between the dynamic mode and the static mode whenever predefined conditions are met.

2. The controller (16) according to claim 1, wherein:

   • a necessary condition for switching from the dynamic mode to the static mode is that a rate of segments uploaded from the peer-to-peer cache (10) in the peer-to-peer network is greater than a threshold rate, and/or
   • a necessary condition for switching from the static mode to the dynamic mode is that the rate of segments uploaded from the peer-to-peer cache (10) to peers in the peer-to-peer network is lower than a threshold rate.

3. The controller (16) according to claim 2, wherein the threshold rate is computed from a bit rate of the data stream so that the threshold rate increases when the bit rate of the data stream increases.

4. The controller (16) according to claim 2, wherein the threshold rate is computed from a plurality of rates of segments uploaded in the peer-to-peer network by respective peers which are connected to the controller in the peer-to-peer network.

5. The controller (16) according to the preceding claim, wherein the threshold rate is a predefined percentile of a distribution formed by the plurality of rates.

6. The controller (16) according to claim 1, wherein:

   • a necessary condition for switching from the dynamic mode to the static mode is that a rate of segments uploaded from the peer-to-peer cache (10) in the peer-to-peer network is greater than a first threshold rate,
   • a necessary condition for switching from the static mode to the dynamic mode is that the rate of segments uploaded from the peer-to-peer cache (10) to peers in the peer-to-peer network is lower than a second threshold rate, wherein the second threshold rate is lower than the first threshold rate.

7. The controller (16) according to the preceding claim, wherein:

   • the first threshold rate is computed from a plurality of rates of segments uploaded in the peer-to-peer network by a plurality of first peers which are connected to the controller in the peer-to-peer network,
   • the second threshold rate is computed from a plurality of rates of segments uploaded in the peer-to-peer network by a plurality of second peers.

8. The controller (16) according to the preceding claim, wherein:

   • the first threshold rate is a first predefined percentile of a distribution formed by the plurality of rates of segments uploaded in the peer-to-peer network by the plurality of first peers,
   • the second threshold rate is a second predefined percentile of a distribution formed by the plurality of rates of segments uploaded in the peer-to-peer network by the plurality of second peers
   • the plurality of second peers is not identical to the plurality of first peers and/or the second percentile is different from the first percentile.

9. The controller (16) according to any one of claims 7 and 8, wherein the plurality of second peers is a subset of the plurality of first peers and/or the second percentile is lower than the first percentile.

10. The controller (16) according to the preceding claim, wherein:

    • the controller is configured to detect whether each peer connected to the controller in the peer-to-peer network is set in the static mode or in the dynamic mode,
    • the plurality of first peers comprises all the peers which are connected to the controller in the peer-to-peer network,
    • the plurality of second peers consists of all the first peers which are detected to be set in the static mode.

11. The controller (16) according to any one of the preceding claims, wherein:

    • a necessary condition for switching from the dynamic mode to the static mode is that a number of peers connected to the controller (16) in the peer-to-peer network is strictly lower than a threshold number, and/or
    • a necessary condition for switching from the static mode to the dynamic mode is that a number of peers connected to the controller (16) in the peer-to-peer network is greater than or equal to a threshold number.

12. The controller (16) according to the preceding claim, wherein:

    • the controller (16) is configured to detect whether each of the peers connected to the controller (16) is set in the static mode or in the dynamic mode,
    • only the peers which are detected to be set in the static mode are counted in the number of peers.

13. The controller (16) according to any one of claims 11 to 12, wherein the threshold number is computed from a total number of peers connected to the controller (16) in the peer-to-peer network so that the threshold number increases with the total number of peers.

14. A peer-to-peer streaming module (4) comprising a player (14) and a controller (16) according to any one of the preceding claims for controlling the player (14).

15. A method for controlling a player (14), the player (14) being configured to:

  • play back segments of a data stream stored in a buffer (12), and
  • request at least one segment of the data stream to be transferred from a peer-to-peer cache (10) to the buffer (12) whenever an amount of data pending for playback in the buffer (12) is less than a data threshold, wherein the peer-to-peer cache (10) stores segments of a data stream in a format adapted for transfers in a peer-to-peer network,

wherein the method comprises:

  • in a dynamic mode, alternately setting the data threshold to first value and to a second value greater than the first value,
  • in a static mode, maintaining the data threshold at the second value,
  • switching between the dynamic mode and the static mode whenever predefined conditions are met.

FIG. 1

FIG. 2

FIG. 3

Determining a download completion ratio of at least one segment to be transferred from the P2P cache to the buffer — 100

Computing a score depending on the download completion ratio — 102

104 — The score meets a condition ? — NO

YES

setting a threshold parameter used by the player from a first value to a second value greater than the first value — 106

FIG. 4

Computing a rate of segments uploaded from the cache in the P2P network — 200

Obtaining a threshold rate — 202

204 — Threshold rate crossed ? — NO

YES

Switching between the static mode and the dynamic mode — 206

FIG. 5

```
┌─────────────────────────────────────────────────────┐
│      Collecting statuses broadcasted by connected peers      │──── 300
└─────────────────────────────────────────────────────┘
                              │
                              ▼
┌─────────────────────────────────────────────────────┐
│         Compute a number of static connected peers           │──── 302
└─────────────────────────────────────────────────────┘
                              │
                              ▼
┌─────────────────────────────────────────────────────┐
│               Obtaining a threshold number                   │──── 304
└─────────────────────────────────────────────────────┘
                              │
                              ▼
┌─────────────────────────────────────────────────────┐
│   Computing a rate of segments uploaded from the cache in    │──── 306
│                      the P2P network                         │
└─────────────────────────────────────────────────────┘
                              │
                              ▼
┌─────────────────────────────────────────────────────┐
│                 Obtaining a threshold rate                   │──── 308
└─────────────────────────────────────────────────────┘
                              │
                              ▼
       310 ─────╮          ◇◇◇◇◇◇◇◇◇◇◇◇
                        Criteria met ?        ────── NO ────►
                          ◇◇◇◇◇◇◇◇◇◇
                              │
                             YES
                              │
                              ▼
┌─────────────────────────────────────────────────────┐
│  Switching between the static mode and the dynamic mode      │──── 312
└─────────────────────────────────────────────────────┘
```

FIG. 6

Europäisches
Patentamt

European
Patent Office

Office européen
des brevets

# EUROPEAN SEARCH REPORT

Application Number

EP 22 30 5932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/193551 A1 (DELMAS AXEL [FR] ET AL) 23 June 2022 (2022-06-23) * abstract; figures 1-8 * * paragraph [0062] - paragraph [0168] * ----- | 1-15 | INV. H04L65/1059 H04L65/80 H04L65/61 H04L67/104 |
| A | US 2020/351317 A1 (YOUSEF HIBA [FR] ET AL) 5 November 2020 (2020-11-05) * abstract * * paragraph [0037] - paragraph [0102]; figures 1-2 * ----- | 1-15 | |

TECHNICAL FIELDS
SEARCHED       (IPC)

H04L

The present search report has been drawn up for all claims

| Place of search | Date of completion of the search | Examiner |
|---|---|---|
| The Hague | 22 November 2022 | Manthey, Axel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 30 5932

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2022

| Patent document cited in search report | | Publication date | Patent family member(s) | | Publication date |
|---|---|---|---|---|---|
| US 2022193551 | A1 | 23-06-2022 | EP | 4016954 A1 | 22-06-2022 |
| | | | US | 2022193551 A1 | 23-06-2022 |
| | | | WO | 2022129118 A1 | 23-06-2022 |
| US 2020351317 | A1 | 05-11-2020 | AU | 2020245087 A1 | 04-11-2021 |
| | | | CA | 3135076 A1 | 01-10-2020 |
| | | | EP | 3949434 A1 | 09-02-2022 |
| | | | FR | 3094597 A1 | 02-10-2020 |
| | | | JP | 7059509 B1 | 26-04-2022 |
| | | | JP | 2022524639 A | 09-05-2022 |
| | | | KR | 20210135338 A | 12-11-2021 |
| | | | SG | 11202110647Q A | 28-10-2021 |
| | | | US | 2020351317 A1 | 05-11-2020 |
| | | | US | 2022021719 A1 | 20-01-2022 |
| | | | WO | 2020193754 A1 | 01-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012154287 A